# EUROPEAN PATENT SPECIFICATION

(11) **EP 1 417 045 B1**
(45) Date of publication and mention of the grant of the patent: **20.01.2010**
(21) Application number: 02759027.2
(22) Date of filing: 09.08.2002
(51) Int. Cl.: B07C 5/00, B07C 5/34, B65B 35/00

(54) **SELEANT RING FEEDING DEVICE**
VORRICHTUNG ZUR ZUFÜHRUNG VON DICHTUNGSRINGEN
DISPOSITIF D'ALIMENTATION DE JOINTS D'ETANCHEITE

(30) Priority: 10.08.2001 SE 0102692
(43) Date of publication of application: 12.05.2004
(73) Proprietor: ABB AB, 721 83 Västerås (SE)
(72) Inventor: LILJENFELDT, Dan, S-723 41 Västeras (SE); SJÖGREN, Bo, S-723 45 Västeras (SE); KRUSE, Rolf, S-745 42 Enköping (SE)
(74) Representative: Dahlstrand, Björn
(86) International application number: PCT/SE2002/001447
(87) International publication number: WO 2003/013744

(56) References cited:
- US-A- 4 683 020
- US-A- 4 995 531
- US-A- 5 153 415

## Description

### TECHNICAL FIELD

The present invention relates to a device for supplying, out of an at least partly disordered amount of flabby rings of an elastic material and with essentially the same circumference in an unloaded rest position, the rings piece by piece in one position, and a method with the same purpose and an installation according to the preamble to the corresponding attached independent claim.

The word "flabby" here means that the rings do not automatically assume any predetermined shape if they are laid down or kept raised, but that in such a case they have approximately the same character as an ordinary rubber band.

Further, "essentially the same circumference" means that the rings are intended to have the same circumference, but that deviations may occur. These may even be as large as 5% in said unloaded rest position.

For exemplifying purposes, but in no way limiting for the invention, the handling of O-rings, which are of a rubberlike material and usually used as seals, may be mentioned. This very special application of the invention will hereafter be dealt with in more detail, but the invention includes handling of all types of rings that exhibit the properties defined in the introductory part of the description.

Rings of the above-mentioned kind occasionally occur in a more or less disordered quantity, for example by being placed, perhaps in hundreds, in a bundle or completely disordered in a package. It may then be desirable to provide them one by one to be applied to a structural member or be gripped one by one by a robot or the like. This is the problem with which the present invention is dealing, that is, to supply such rings piece by piece, which means one by one, in one position. "Position" is here to be interpreted in a broad sense, in the sense that this position may be extended in space, such that this also covers the case where different rings are provided piece by piece in different positions in the room.

The handling of rings of the kind defined in the introductory part of the description is not entirely unproblematic. It is difficult for a robot to grip only one ring out of an at least partly disordered quantity of such rings. There is a significant risk that now and then a plurality of rings are being gripped. Further, such rings are difficult to feed forward one by one; nor are they fit to be pushed forward, for example on a mandrel. In addition, because of their flabby nature, they are difficult to lift. As regards conventional O-rings, there is of course an additional aggravating fact in the form of a relatively large tolerance as far as the diameter in unloaded rest position is concerned.

### BACKGROUND ART

In a device of the kind mentioned in the introductory part of the description, for supplying the O-rings piece by piece, a large shaking table is utilized, on which the O-rings are placed and shaken in order that a claw may pick them up one at a time and then, in a complicated manner, ensure that they are fed to said position while separating any extra rings simultaneously picked up.

Another prior art device utilizes a rotating drum, into which the O-rings are poured together with talcum whereupon a claw tries to pick them up one by one in a manner similar to that of the device described in the preceding paragraph.

Both of the above types of devices are relatively complicated and therefore both costly and sensitive to disturbances.

US 4,995,531 discloses a ring dispenser comprising a rotating rod having an acme thread along one portion and a helical coil spring at a dispensing end, the ring dispenser feeding individual rings to a ring transfer device located at the dispensing end of the rod. The rings have diameters greater than the separation between the individual threads of the rod, and the spacing between the convolutions of the coil spring is greater than the thickness of the rings.

US 4,683,020 discloses an apparatus and method for storing and feeding tire beads, wherein a rack which supports the beads in a separated condition is transported to a storing and feeding apparatus. In the storing and feeding apparatus, the rack is used to place the beads around a plurality of continuous conveyors which are expanded to grip the beads. After the rack is removed from the feeding and storing apparatus, the conveyors are actuated to simultaneously and intermittently feed the beads to a bead transfer member.

### SUMMARY OF THE INVENTION

The object of the present invention is to provide a device of the kind defined in the introductory part of the description, which is simple in construction and has the ability to reliably achieve the above-mentioned supply of the described rings piece by piece in one position.

This object is achieved according to the invention by providing such a device with at least two rolls adapted to receive, on a reception area thereof, an at least partly disordered quantity of said rings, which are each fitted onto all the rolls, by arranging the rolls to define together, through contact surfaces for the rings on their envelope surfaces and their mutual distances, a minimum inner circumference for the rings, by arranging the rolls to define, in a first mutual position thereof, said minimum inner circumference of the rings such that said circumference decreases continuously, over at least a major portion of the rolls, from the reception area in a direction towards a first end of the rolls and is larger than the inner circumference of the rings in said rest position, and in that it comprises means adapted to bring at least a first one of the rolls to rotate in order to pull the rings along with it, by means of friction, and to feed them from said reception area towards said first end in order to deliver them piece by piece to said position.

Thus, the invention is based on the realization that a sorting of the rings of this kind may be made by taking a bundle of such rings and fitting them around at least two said rolls, and then, by means of rotation of at least one of the rolls, feeding the rings from the reception area towards an end of the rolls by keeping the rings stretched out on the rolls and these define a minimum inner circumference for the rings, which continuously decreases from the reception area towards the first end. In this way, the rings will tend to move towards the first end, where their potential energy will be lower. A successive such movement is made possible by the first roll pulling the rings along with it in its rotation. From the bundle in the reception area, the rings, during rotation of said first roll, will tend to leave the reception area one by one, so that finally, when the front ring, viewed in the direction of feeding, has been fed a certain distance, for example almost up to said first end, the rings will be stretched out one after the other around the rolls and thereby be supplied piece by piece in one position. Such a device is very simple in construction, which implies a low likelihood of failure and that it can be manufactured at an attractive low cost.

According to a preferred embodiment of the invention, the rolls are arranged movable relative to each other essentially perpendicularly to their longitudinal axes between at least said first position and a second position, in which the rolls are more concentrated and said minimum inner circumference of the rings defined by the rolls from said reception area and to said position is smaller than the inner circumference of the rings in an unloaded rest position, and a member is arranged to achieve the movement of at least one of the rolls in order to transfer these, at least once during said feeding, to the second position for the tension in the rings to relax and then again to the first position. It has proved to be very advantageous to move the rolls closer to each other, during the feeding of the rings from the reception area to said first end, in order to allow the tension in the rings to relax. By doing so, those rings which are positioned obliquely above any other ring tend to find the correct position by being allowed to fall between adjacent rings. In this way, the sorting function of the device is facilitated, allowing the rings to be supplied piece by piece.

According to another preferred embodiment of the invention, the device comprises an apparatus adapted to control said member to transfer the rolls, repeatedly during said feeding, between the first and second positions. This further increases the reliability of the function of the device since rings which may have ended in the wrong position will have more chances of finding the right position because of the repeated reliefs of the ring. In this connection it is suitable, which is the subject of another preferred embodiment of the invention, to control said member to achieve transfer of the rolls between the first and second positions with an essentially constant frequency, that is, at essentially regular time intervals, during said feeding, in which case it is preferred for the rolls to be in the first position for a longer time than in the second position and the ratio of the residence time in the first position to the residence time in the second position is at least 3:1, preferably between 3:1 and 6:1.

According to another preferred embodiment of the invention, only one of the rolls is movable to make possible said relative movement of the rolls between the first and second positions, and said member is adapted to achieve movement of the rolls. It is, of course, fully possible to allow more rolls, and in the case of two rolls to allow both of these, to be moved in order to achieve said relative movement, but this embodiment is to be preferred because of its simplicity.

According to another preferred embodiment of the invention, the rolls are two in number and arranged one essentially vertically above the other. This is advantageous since it means that the force of gravity will assist in causing rings that are positioned obliquely above one another, when being transferred from the first to the second position, to "fall down" in the correct position between other rings when the tension relaxes in the rings.

According to another preferred embodiment, the device comprises members for varying the speed at which said means rotate said first one of the rolls. In this way, the speed at which the rings are being fed, and hence also the sorting function of the device, may be adjusted to the character of the particular rings that are to be handled at a particular time in order to optimize the function of the device.

According to another preferred embodiment of the invention, all the rolls are rotatably arranged, which is necessary for rings of a certain material and a certain sensitivity, since otherwise they could be damaged too much because of the effect of frictional forces occurring, but which is also advantageous in most cases of use. However, it is not necessary that all the rolls can be brought into rotation, but it may very well be so that a second one of the rolls is arranged to be freely rotatable and, in said first mutual position while the first roll is being rotated, to rotate with this roll through the influence of friction from rings making contact therewith, which is the subject of another preferred embodiment of the invention. In this way, without any complicated synchronization, it will be ensured that the rolls rotate at essentially the same speed and that they do not exercise any unnecessary stress on the rings.

According to another preferred embodiment of the invention, at least two of said rolls have angularly adjusted shafts relative to each other in order to define said minimum inner circumference of the rings so that this continuously decreases from said reception area towards a first end of the rolls. In this way, rolls with a substantially constant diameter in the longitudinal direction may be utilized and the continuous reduction of the minimum inner circumference still be attained. However, there are a number of other possibilities of achieving the latter object, such as, for example, by forming one of the rolls with a diameter that decreases in a direction from the reception area towards the first end. In such a case, the rolls could be arranged with parallel longitudinal axes. There is also a possibility of combining the latter two embodiments, and, for example, also two rolls could have a diameter decreasing in said direction.

According to another preferred embodiment of the invention, at least one of the rolls is arranged to be capable of swinging in a plane comprising its longitudinal axis for setting the angle of the longitudinal axis of this roll relative to the longitudinal axis of another one of the rolls, and members are arranged to swing said rolls to achieve setting of said angle. Setting the speed of feeding of the rings, so as to suit the character of the particular rings that are momentarily to be handled, may also occur in this way. In this context it is advantageous if the rolls can be set within a range of values of said angle of 0-8°. In a special embodiment for feeding of O-rings, an angle of about 2° has proved to be suitable. A combination of such setting with a setting of the speed of rotation of said first roll permits a very good "trimming" of the device for various types of rings to be handled thereby.

According to a preferred embodiment of the invention, the device is designed to supply, piece by piece in one position, O-rings of rubber with an essentially circular cross section, that is, conventional O-rings used in particular for sealing purposes.

The invention also relates to a method according to the attached independent method claim. The advantages of this embodiment and the embodiments defined in the attached dependent claims are the same as those in the device according to the invention and should be manifestly clear from the above description of the device according to the invention.

The invention also relates to an installation for transferring, out of an at least partly disordered amount of flabby rings of an elastic material and with essentially the same diameter in an unloaded rest position, the rings piece by piece to a pick-up position for an industrial robot, which is **characterized in that** it is provided with at least one device according to the invention. Such an installation may find use, for example, in the automotive industry for applying O-rings to a structural member, such as a cylinder liner.

According to a preferred embodiment of such an installation, it is provided with at least two said devices arranged to be movable between a sorting position for supplying, based on said partly disordered amount of flabby rings, the rings piece by piece in one position and a position for collection of the rings one by one by said robot, such that the rings may be supplied piece by piece in one device while they are being picked up by the robot from another device, and means are arranged to move the devices between the sorting position and the pick-up position to bring the devices to shift and avoid downtimes for the robot. In this way there is achieved, in a simple manner, a steady supply of the rings in question one by one in the pick-up position of the robot.

The invention also relates to a computer program product and a computer-readable medium with a program, registered thereon, according to the corresponding appended claims. It is readily realized that the method according to the invention, and defined in the appended set of method claims, is well suited to be carried out by means of program instructions from a processor capable of being influenced by a computer program provided with the program steps in question. Although not explicitly expresses in the claims, the invention comprises such computer program products and such a computer-readable medium combined with a method, a device or an installation according to any of the appended claims according to these categories.

Additional advantages and advantageous features of the invention will be clear from the following description and the other dependent claims.

### BRIEF DESCRIPTION OF THE DRAWINGS

Preferred embodiments of the invention, cited as examples, will be described in the following with reference to the accompanying drawings, wherein
Figure 1 is simplified perspective view of an installation according to a preferred embodiment of the invention, which is provided with two devices according to the invention,
Figure 2 is a partly cut-away, simplified side view of part of the installation according to Figure 1,
Figure 3 is a perspective view of a feature of the installation according to Figure 1,
Figure 4 is a simplified side view of a device according to a first preferred embodiment of the invention with its two rolls in a third position suited for supplying a quantity of partly disordered rings onto a reception area for these,
Figure 5 is a simplified view from the end of the rolls in Figure 4, illustrating how the rings are arranged on the rolls in that position,
Figure 6 is a view of the device, corresponding to that of Figure 4, in a first position with stretched-out rings suited for feeding the rings from the reception area towards a first end of the rolls,
Figure 7 is a view of the device, corresponding to that of Figure 4, with the rolls in a second position, in which the rings are relieved,
Figure 8 is a view, corresponding to that of Figure 4, with the rolls of the device in said first position, illustrating what it looks like when the device has completed its sorting operation, and
Figure 9 is a view of the device, corresponding to that of Figure 4, according to a second preferred embodiment of the invention.

### DETAILED DESCRIPTION OF PREFERRED EMBODIMENTS OF THE INVENTION

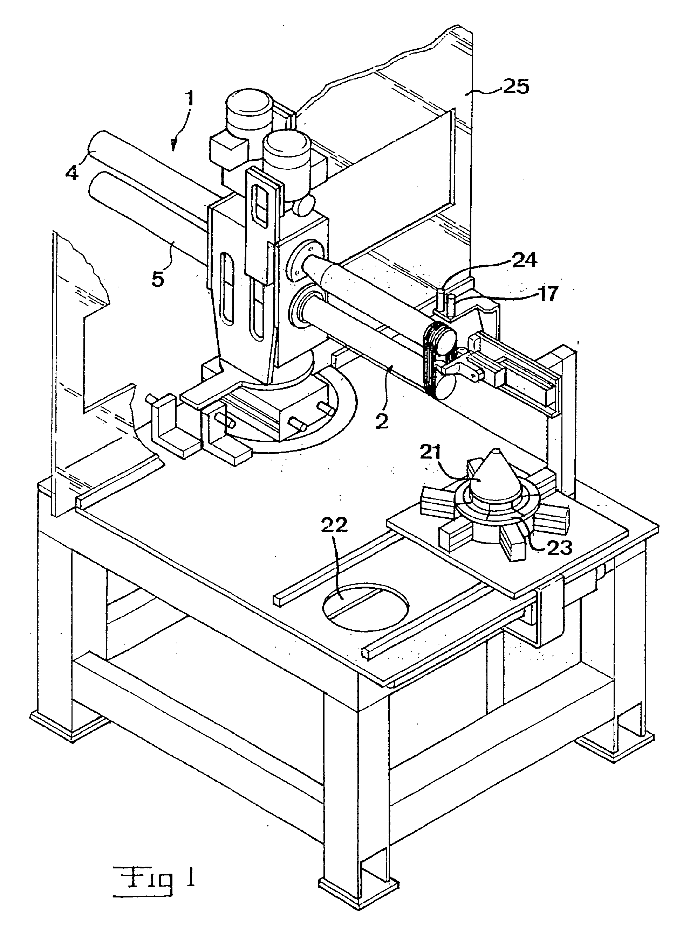

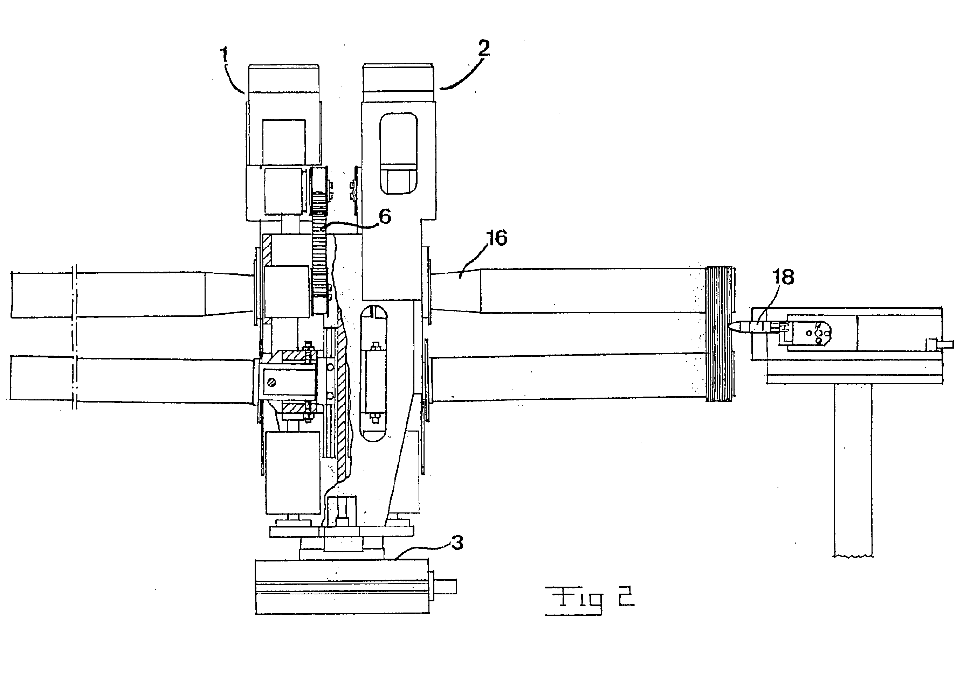

The composition of a device for supplying rings, out of an at least partly disordered amount of flabby rings of an elastic material and with essentially the same circumference in an unloaded rest position, piece by piece in one position according to the invention and an installation which includes such a device will now be described while simultaneously referring to Figures 1-5. The installation exhibits two identical devices 1, 2 according to the invention, which are arranged on a common carrier 3, which is pivotal about an essentially vertical axis. Each device according to the invention exhibits two rotatably arranged rolls 4, 5, of which a first roll 4 may be brought to rotate via a power means 6, indicated in Figure 2 as a belt transmission. The longitudinal axes of the two rolls are angularly adjusted in relation to each other at an angle of 0° to 8°, in the present case about 1°, such that the minimum inner circumference that contact surfaces for the rings on the envelope surfaces of the rolls and the distance between the rolls together define for rings tensioned around the rolls continuously decreases from a reception area 12 in a direction towards a first end 7 of the rolls.

Further, one of the rolls, namely the second roll 5, is arranged to be movable relative to the first roll 4 essentially perpendicular to the longitudinal axes of the rolls without the mutual angle between the longitudinal axes of the rolls being changed. For this reason, the device exhibits a schematically indicated power device 8, here a pneumatically driven power cylinder.

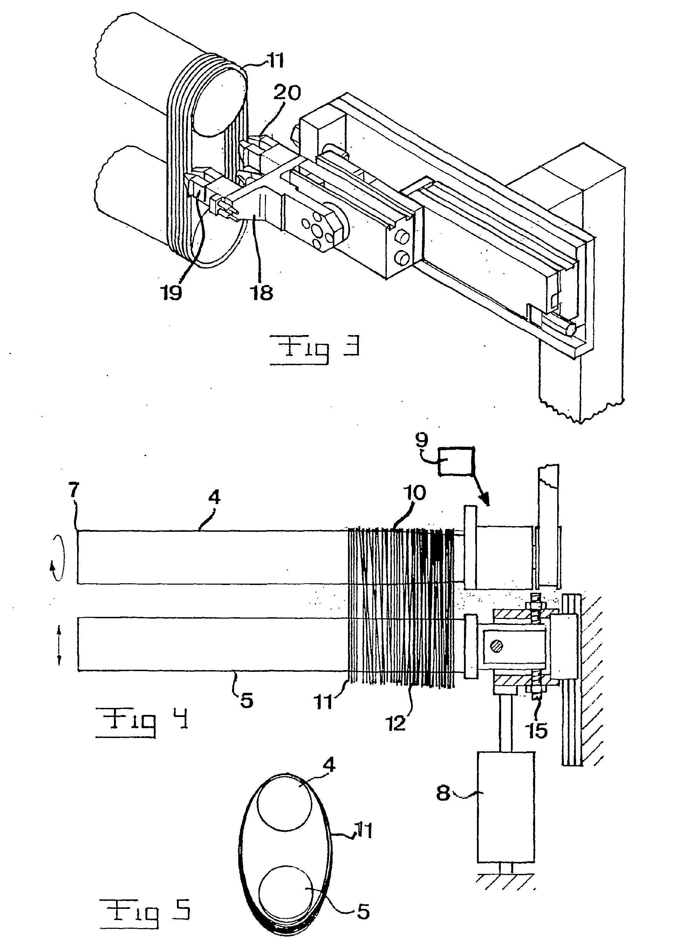

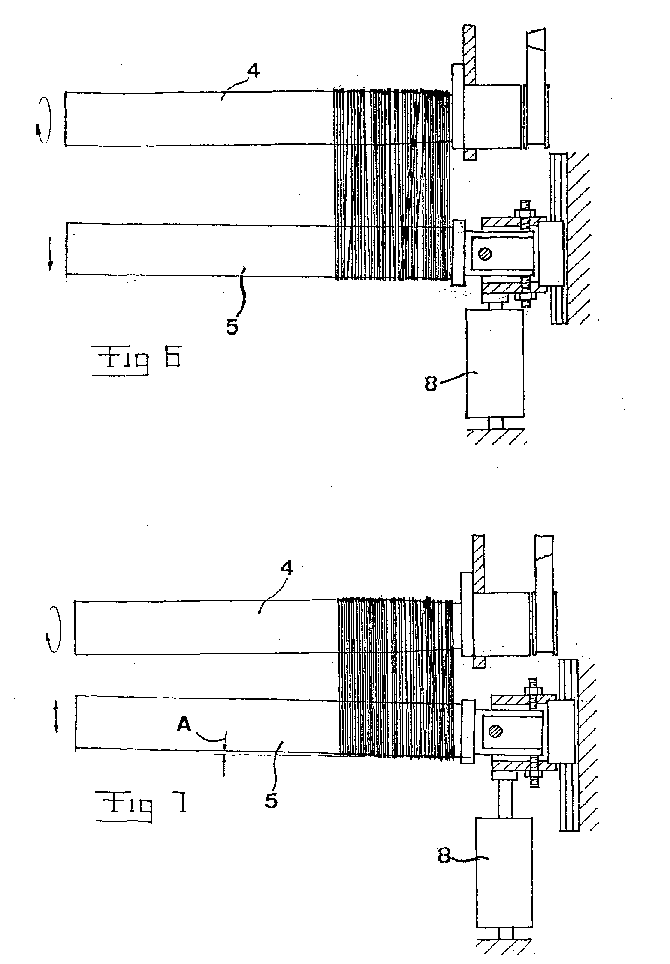

The mode of operation of the device according to the invention will now be described with reference to Figures 4-8. An apparatus 9, schematically indicated in Figure 4, is adapted to control the function of the device by sending control pulses to the power devices included therein. The power device 8 is controlled to move the second roll 5 to a third mutual position shown in Figure 4, which is a charging position and in which said minimum inner circumference of the rings defined by the rolls is considerably smaller than the inner circumference of the rings in their rest position. With the rolls in this position, an operator, for example, takes a bundle with perhaps around 150 O-rings, possibly after having weighed them on a balance, and pushes the bundle over the rolls to the reception area 12 to attain the position that the bundle 10 has in Figure 4. In this position, the O-rings 11 are hanging freely on the rolls, as indicated in Figures 4 and 5. Then, the power device 8 is controlled to move the second roll 5 relative to the first roll 4 to attain a first mutual position of the rolls, illustrated in Figure 6, in which the envelope surfaces of the rolls define said minimum inner circumference of the rings such that this circumference is larger than the inner circumference of the rings in the rest position thereof. This is then performed such that, while taking into consideration any tolerances, all the rings have safely been expanded from their rest positions and would also be expanded if they were in the vicinity of the first end 7 of the rolls.

When the rolls are in the position according to Figure 6, the power means 6 (see Figure 2) is controlled to rotate the first roll 4, which will result in a tendency of this roll to bring along with it the rings, making contact with it under prestressing, in its rotation and also to rotate the freely rotatable second roll 5 through the influence of friction. Since the rolls are somewhat angularly adjusted relative to each other, the rings will thus travel from the reception area 12 towards said first end 7. The first roll 4 is preferably rotated at a speed of about 50-100 rev/min. In this way, the rings tend to leave the reception area one by one and travel towards the first end 7, so that a sorting out of the bundle occurs.

The control apparatus 9 is adapted to control the power device 8 to transfer repeatedly, preferably at regular time intervals, the second roll 5 from the first position to a second position shown in Figure 7, in which the rolls are more concentrated and the minimum inner circumference of the rings defined by the rolls from the reception area and to the first end is smaller than the inner circumference of the rings in the unloaded rest position, and again to the first position according to Figure 6. This will result in the tension in the rings relaxing and the rings that may possibly be positioned obliquely above any other rings tend to find the correct position by being allowed to fall in between adjacent rings. In this context it may be suitable for the rolls to reside about five times as long in the position according to Figure 6 as in that according to Figure 7, but also other ratios between the residence times in these two positions are conceivable.

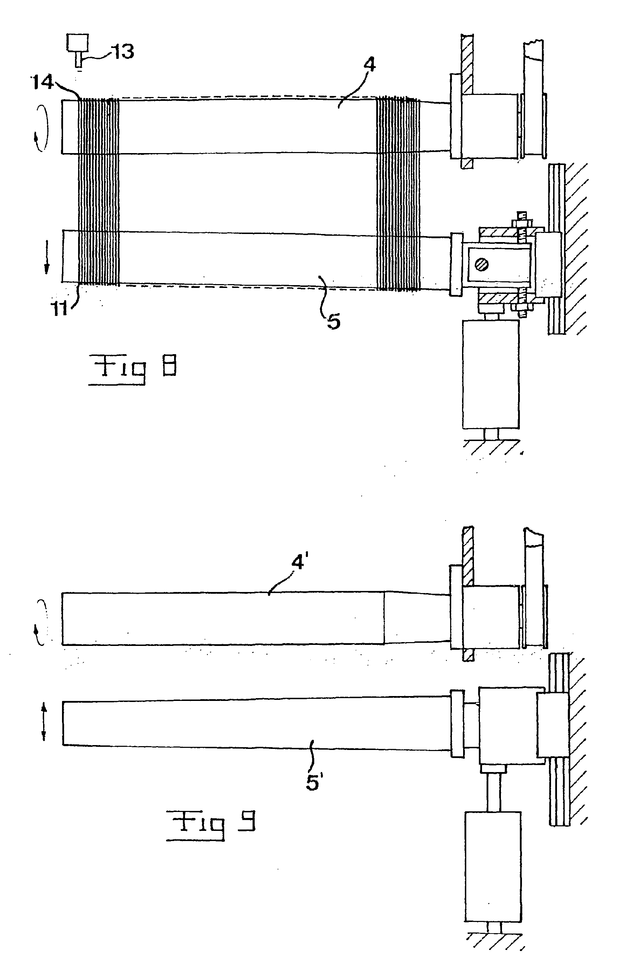

The device further exhibits a sensor 13, indicated in Figure 8, for sensing when a first one of the rings arrives at a predetermined position 14 and to then send out a signal that stops the rotation of the roll 4 via the means 6 and hence the feeding of the rings along the rolls. Then, the position shown in Figure 8 has been achieved. In this position, the O-rings are arranged distributed one by one next to each other along the rolls.

Figure 4 indicates members 15 in the form of adjusting screws for swinging the second roll 5 relative to the first roll to set the angle A (see Fig. 7), in this roll the longitudinal axis relative to the longitudinal axis of the second roll, such that the speed at which the device is feeding the rings may be adjusted according to the nature of the rings.

Further, it is clear from, inter alia, Figure 2 that the first roll 4 in one part of the reception area exhibits a somewhat conical portion 16, the purpose of which is to prevent the outermost O-rings from being tensioned too hard in case of a thick bundle of O-rings being supplied in the charging position of the device.

Figure 9 schematically illustrates a device according to a second preferred embodiment of the invention, which differs from that according to Figure 4 in that the second roll 5 exhibits a conicity by having a diameter that continuously decreases in a direction towards the first end, such that the longitudinal axes of the two rolls here may be parallel but still a minimum inner circumference decreasing from the reception area in a direction towards the first end may be defined by the envelope surfaces of the rolls.

Now, the composition and function of the installation according to Figure 1 will be described. A first one 1 of the devices is in a position for charging and feeding O-rings for carrying out the method illustrated by Figures 4-8 and just described. The second device 2 is in a position in which an industrial robot may collect the rings. The second device 2 has then previously been in the position assumed by the first device for attaining the position shown in Figure 8. When the device is in the position assumed by the device 2 in Figure 1, the two rolls are in the first mutual position and the first roll is brought to rotate such that the outermost ring is fed to a pick-up position defined by a sensing member 17. In this position, a gripping member 18 with two gripping claws 19, 20 is moved to the outermost ring and grips the ring at two separate locations and pulls the ring from the rolls. This causes the gripping member with its gripping claws to swing downwards and release the ring onto an essentially vertically directed cone 21. Then the ring fallen over the cone 21 is clamped by a chuck 23. Thereafter, the cone is passed downwards into a hole (not shown) and the chuck is moved to an assembly position over the hole 22, and an industrial robot (not shown) moves a cylinder liner down into an opening defined by the chuck, whereupon a stripper pushes the ring onto the liner, and then the chuck and the cone are controlled to return to the charging position according to Figure 1. Meanwhile, the first roll 4 has been brought to rotate so that a new ring has been fed to the position for gripping by the gripping member 18. This procedure continues until all the rings of the second device have been picked up by the gripping member. In the meantime, the device 1 has been charged with rings and these are supplied piece by piece in the position shown in Figure 8.

When the gripping member picks up the last ring, this is sensed by a sensor 24 and the control apparatus then causes the carrier 3 to rotate so that the devices 1 and 2 change positions. After this, the first roll is caused to rotate so that the outermost ring is fed to the position determined by the sensor 17. This must be managed by the installation with maintained working pace for collection of the rings by the industrial robot, which, for example, may mean that this must not take longer than 20 seconds.

Figure 1 indicates the presence of a wall 25 which separates the area for charging and feeding O-rings from the area for the work of the industrial robot. There are, of course, advantageously also other safety arrangements, which are not illustrated in the figures since they have no bearing on the invention, such as a fence with a gate and a gate switch with emergency shutdown of the installation.

The invention is not, of course, in any way limited to the preferred embodiments described above, but a plurality of possibilities of modification thereof will be obvious to a person skilled in the art without deviating from the scope of the appended claims.

For example, it would be possible to have more than two rolls to define a minimum inner circumference for the rings. Arbitrary combinations with regard to rotatability, driving, conicity, obliquity, and the like, of these rolls are possible.

It is only necessary for one of the rolls to be rotatable, whereas the other roll or rolls may be fixed, although this would not be acceptable for most materials of the rings. However, for some very special material of the rings and of a roll, this roll could be fixed, so that the rings slide over the envelope surface of that roll in an almost frictionless manner. In such a case, it is also possible for the roll not to have a circular cross section but it could have a semicircular or otherwise part-circular cross section with the curved envelope surface used for receiving rings. Such a design of a roll is also intended to be covered by "rolls", as used in the claims.

Nor should "Continuously decreases from said reception area towards a first end of the rolls" be interpreted as if said inner minimum circumference must decrease all the way to the first end, but this only states that it shall decrease continuously from the reception area and in a direction towards the first end. It is quite possible that the rolls terminate in a portion without any such decrease, for example a short such portion to counteract the fact that the outermost ring shall be able to slide off the rolls if the outermost ring in the gripping position according to Figure 3 is close to said first end.

Finally, it is pointed out that the use of only one roll which receives a bundle of rings and is caused to rotate, possibly while arranging the rolls in an inclined position, does not lead to the rings being supplied piece by piece in a position with the required reliability.

## Claims

1. A device for supplying, out of an at least partly disordered amount of flabby rings of an elastic material and with essentially the same circumference in an unloaded rest position, the rings piece by piece in one position, **characterized in that** it comprises at least two rolls (4, 5) arranged to receive, on a reception area (12) thereof, an at least partly disordered amount (10) of said rings (11), which are each fitted around all the rolls, that the rolls are arranged to define together, through contact surfaces for the rings on their envelope surfaces and their mutual distances, a minimum inner circumference for the rings, that the rolls are arranged to define, in a first mutual position thereof, said minimum inner circumference of the rings such that said circumference decreases continuously, over at least a major portion of the rolls, from said reception area in a direction towards a first end of the rolls and is larger than the inner circumference of the rings in said rest position, and that it comprises means (6) arranged to bring at least a first one (4) of the rolls to rotate in order to pull the rings along with it, by means of friction, and to feed them from the reception area towards said first end to deliver them piece by piece to said position.

2. A device according to claim 1, **characterized in that** the rolls (4, 5) are arranged to be movable relative to each other essentially perpendicularly to their longitudinal axes between at least said first position and a second position, in which the rolls are more concentrated and said minimum inner circumference of the rings defined by the rolls from said reception area and to said position is smaller than the inner circumference of the rings in an unloaded rest position, and that a device (8) is arranged to bring about movement of at least one of the rolls in order to transfer, at least once during said feeding, said rolls to the second position in order for the tension in the rings to relax and then again to the first position.

3. A device according to claim 2, **characterized in that** in comprises, in addition, an apparatus (9) adapted to control said device (8), repeatedly during said feeding, to transfer the rolls (4, 5) between the first and second positions.

4. A device according to claim 3, **characterized in that** the apparatus (9) is adapted to control said device (8) to bring about a transfer of the rolls between the first and second positions with an essentially constant frequency, that is, at essentially regular time intervals, during said feeding.

5. A device according to claim 3 or 4, **characterized in that** the apparatus (9) is adapted to control said device (8) to maintain the rolls for a longer period in the first position than in the second position.

6. A device according to claim 5, **characterized in that** the apparatus (9) is adapted to control said device (8) to give the rolls a residence time in the first position in relation to the residence time in the second position that is at least of the ratio of 3:1, preferably between 3:1 and 6:1.

7. A device according to any of claims 2-6, **characterized in that** only one (5) of the rolls is movable to permit said relative movement of the rolls between the first and second positions, and that said device (8) is adapted to bring about movement of said roll.

8. A device according to any of claims 2-7, **characterized in that** the rolls (4, 5) are two in number and arranged one (4) essentially vertically above the other (5).

9. A device according to any of the preceding claims, **characterized in that** the rolls (4, 5) are arranged to be movable relative to each other essentially perpendicularly to their longitudinal axes, and that a device (8) is arranged to bring about movement of at least one of the rolls for transfer of the rolls to a third mutual position, in which said minimum inner circumference of the rings defined by the rolls is considerably smaller than the inner circumference of the rings in said rest position for supplying to the reception area said partly disordered amount of rings to be fed to said position.

10. A device according to any of the preceding claims, **characterized in that** it comprises a member for varying the speed at which said means (6) rotate said first one of the rolls.

11. A device according to any of the preceding claims, **characterized in that** said means (6) are arranged to bring said first roll to rotate.at a speed of 50-100 rev/min.

12. A device according to any of the preceding claims, **characterized in that** all the rolls (4, 5) are arranged to be rotatable.

13. A device according to any of the preceding claims, **characterized in that** a second one (5) of the rolls is arranged to be freely rotatable and to rotate with said first roll, in said first mutual position while the first roll (4) is rotating, through the influence of friction from rings making contact therewith.

14. A device according to any of the preceding claims, **characterized in that** the at least two of said rolls (4, 5) have oblique axes relative to each other to define said minimum inner circumference of the rings so that this continuously decreases from said reception area towards a first end of the rolls.

15. A device according to any of the preceding claims, **characterized in that** the at least one roll (5') has a diameter that decreases in a direction from said reception area towards said first end in order to achieve a continuous decrease of said minimum inner circumference of the rings from the reception area towards a first end of the rolls.

16. A device according to any of the preceding claims, **characterized in that** at least one of the rolls (4, 5) is arranged to be capable of swinging in a plane comprising its longitudinal axis for setting the angle of the longitudinal axis of this roll (5) relative to the longitudinal axis of another one of the rolls, and that members (15) are arranged to swing said roll to achieve setting of said angle.

17. A device according to claim 16, **characterized in that** said one (5) of the rolls is capable of swinging, via said members, within a range of values of said angle of 0-8°.

18. A device according to any of the preceding claims, **characterized in that** the rolls (4, 5) are arranged to exhibit, in said first mutual position, a decrease of said minimum inner circumference of the rings corresponding to an inclination of between 0.5 and 8 degrees between the processes of opposite turning points of the rings defined by the envelope surface of the rolls from the reception area towards said first end.

19. A device according to any of the preceding claims, **characterized in that** at least one of the rolls has, in the reception area, a portion (16) of a diameter decreasing in a direction opposite to said first end.

20. A device according to any of the preceding claims, **characterized in that** the number of rolls (4, 5) is two.

21. A device according to any of the preceding claims, **characterized in that** it comprises members (13) adapted to sense when a first one of the rings arrives at said position and thereby to send out a signal stopping said means (6) and hence the feeding.

22. A method for supplying, out of an at least partly disordered amount of flabby rings of an elastic material and with essentially the same circumference in an unloaded rest position, the rings piece by piece in one position, **characterized in that** an at least partly disordered amount of said rings are fitted, in a reception area (12), around at least two rolls (4, 5), which, through contact surfaces for the rings on their envelope surfaces and their mutual distance, together define a minimum inner circumference for the rings, which are each fitted around all the rolls, that the rolls are maintained in a first mutual position to define said minimum inner circumference of the rings so that this continuously decreases, over at least a major portion of the rolls, from the reception area in a direction towards a first end of the rolls and is larger than the inner circumference of the rings in said rest position, and that at least a first one of the rolls is brought to rotate to pull along with it the rings, by means of friction, and feed them from the reception area towards said first end to deliver them piece by piece to said position.

23. A method according to claim 22, **characterized in that** at least once during said feeding, the rolls (4, 5) are moved relative to each other essentially perpendicular to their longitudinal axes between said first position and a second position in which the rolls are more concentrated and said minimum inner circumference of the rings, which is defined by the rolls from said reception area and to said position, is smaller than the inner circumference of the rings in an unloaded rest position, and then the rolls are again moved to the first position.

24. A method according to claim 23, **characterized in that** the rolls (4, 5) are transferred between the first and second positions on repeated occasions during said feeding.

25. A method according to claim 24, **characterized in that** the rolls (4, 5) are transferred between the first and second positions with an essentially constant frequency, that is, at essentially regular time intervals, during said feeding.

26. A method according to claim 24 or 25, **characterized in that** the rolls (4, 5) are maintained for a longer time in the first position than in the second position.

27. A method according to claim 26, **characterized in that** the rolls (4, 5) are given a residence time in the first position in relation to the residence time in the second position that is at least of the ratio of 3:1, preferably between 3:1 and 6:1.

28. A method according to any of claims 22-27, **characterized in that,** for supplying said partly disordered amount of rings to the reception area, the rolls (4, 5) are moved relative to each other essentially perpendicular to their longitudinal axes to a third position, in which said minimum inner circumference of the rings defined by the rolls is considerably smaller than the inner circumference of the rings in an unloaded rest position.

29. A method according to any of claims 23-28, **characterized in that** only one (5) of the rolls is moved to achieve said relative movement of the rolls between said different mutual positions.

30. A method according to any of claims 22-29, **characterized in that** the feeding is carried out on rolls (4, 5) which are all rotatably arranged.

31. A method according to any of claims 22-30, **characterized in that** a first one (4) of the rolls is brought to rotate whereas a second one (5) of the rolls is freely rotatably and, in said first mutual position, brought to rotate with the first roll through the influence of friction from rings making contact therewith.

32. A method according to any of claims 22-31, **characterized in that** the rolls (4, 5) are swung mutually in a plane comprising their longitudinal axes for setting the mutual angle between the longitudinal axes of the rolls for setting the speed for said feeding of the rings.

33. An installation for transferring, out of an at least partly disordered amount of flabby rings (11) of an elastic material and with essentially the same diameter in an unloaded rest position, the rings piece by piece to a pick-up position for an industrial robot, **characterized in that** the installation is provided with at least one device (1, 2) according to any of claims 1-21.

34. An installation according to claim 33, **characterized in that** it is provided with at least two said devices (1, 2) arranged to be movable between a sorting position in order to deliver, out of said partly disordered amount of flabby rings, the rings piece by piece in one position and a position for collection of the rings one by one by said robot, so that the rings can be delivered piece by piece in one device while they are being picked up by the robot from another device, and that it comprises members arranged to move the devices between the sorting position and the pick-up position in order to bring the devices to shift positions and avoid downtimes for the robot.

35. An installation according to claim 34, **characterized in that** the devices are arranged on a common, rotatable carrier (3) with their rolls (4, 5) pointing with said first end essentially radially outwards from said end, and that said transfer members are arranged to bring about rotation of the carrier to shift positions of the devices.

36. An installation according to claim 33 or 34, **characterized in that** said means (6) of the devices (1, 2) are arranged to feed the rings, in a pick-up position, step by step after the robot has collected a ring, so that the ring located nearest to said first end is always in the same position suited for said collection.

37. An installation according to any of claims 33-36, **characterized in that** said robot is provided with a gripping member (18) arranged to grip a ring (11) in the pick-up position at at least two different locations along the ring in order thereafter to keep the ring relatively open.

38. An installation according to claim 37, **characterized in that** it is provided with a cone (21), with its point essentially vertically directed, arranged to receive a ring gripped by the gripping member (18) of the robot and then released from above.

39. An installation according to claim 38, **characterized in that** it comprises members (23) arranged to stretch out the ring received on said cone (21) while increasing the diameter of the ring, that members are arranged to move away the cone when the ring is thus stretched out, and that members are arranged to supply the ring from said stretching member to a structural member, such as a cylinder liner, intended to be brought within the ring, so that this can then make contact in a prestressed manner around this structural member.

40. A computer program product for controlling a device for supplying, out of an at least partly disordered amount of flabby rings of an elastic material and with essentially the same circumference in an unloaded rest position, the rings piece by piece in one position, wherein the device comprises at least two rolls (4,5) arranged to receive, on a reception area (12) thereof, an at least partly disordered amount of said rings, which at least two rolls, through contact surfaces for the rings on their envelope surfaces and their mutual distance, together define a minimum inner circumference for the rings, which can each be fitted around all the rolls, and wherein the rolls are arranged to define, in a first mutual position, said minimum inner circumference of the rings so that this continuously decreases, over at least a major portion of the rolls, from the reception area in a direction towards a first end of the rolls and is larger than the inner circumference of the rings in said rest position, the computer program product comprising software code portions to instruct a processor to carry out the following step when the product is run on a computer:
controlling the device to bring at least a first one of rolls to rotate to pull along with it the rings, by means of friction, and feed the rings from the reception area towards said first end to deliver the rings piece by piece to said position.

41. The computer program product according to claim 40, further comprising software code portions to instruct a processor to carry out the following step when run on a computer:
controlling the device to move, at least once per feeding of rings, the rolls relative to each other essentially perpendicular to their longitudinal axes between said first position and a second position in which the rolls are more concentrated and said minimum inner circumference of the rings, which is defined by the rolls from said reception area and to said position, is smaller than the inner circumference of the rings in an unloaded rest position, and then to move the rolls back to the first position.

42. The computer program product according to claim 40 or 41, further comprising
computer program code portions for controlling the device to carry out the method steps of any one of claims 24-29 or 31-32.

43. A computer program product according to any one of claims 40-42, provided at least partly over a network such as the Internet.

44. A computer-readable medium with the computer program product of any one of claims 40-43 registered thereon.

## Patentansprüche

1. Ein Gerät, um aus einer mindestens teilweise ungeordneten Menge von wabbeligen Ringen eines elastischen Materials und mit im Wesentlichen demselben Umfang in einer unbelasteten Ruheposition die Ringe Stück für Stück in eine Position zu liefern, **dadurch gekennzeichnet, dass** es mindestens zwei Rollen (4, 5) umfasst, die angeordnet sind, auf einer Empfangsfläche (12) davon eine mindestens teilweise ungeordnete Menge (10) der Ringe (11) zu empfangen, von welchen ein jeder um all die Rollen herum aufgezogen ist, dass die Rollen eingerichtet sind, durch die Kontaktoberflächen für die Ringe auf ihren Einhülloberflächen und ihren wechselseitigen Abständen zusammen einen minimalen inneren Umfang für die Ringe zu definieren, dass die Rollen eingerichtet sind, in einer ersten wechselseitigen Position davon den minimalen inneren Umfang der Ringe zu definieren, so dass der Umfang kontinuierlich abnimmt über mindestens einen Großteil der Rollen von der Empfangsfläche in einer Richtung auf ein erstes Ende der Rollen und größer ist als der innere Umfang der Ringe in der Ruheposition, und dass es Mittel (6) umfasst, die eingerichtet sind, mindestens eine erste (4) der Rollen zum Rotieren zu bringen, um die Ringe mit ihr vermittels Reibung entlangzuziehen und sie von der Empfangsfläche zu dem ersten Ende hin zu befördern, um sie Stück für Stück zu der Position zu liefern.

2. Ein Gerät nach Anspruch 1, **dadurch gekennzeichnet, dass** die Rollen (4, 5) eingerichtet sind, relativ zueinander im Wesentlichen senkrecht zu ihren longitudinalen Achsen zwischen mindestens der ersten Position und einer zweiten Position beweglich zu sein, in welcher die Rollen konzentrierter sind und der minimale innere Umfang der Ringe, definiert durch die Rollen von der Empfangsfläche und zu der Position, kleiner ist als der innere Umfang der Ringe in einer unbelasteten Ruheposition, und dass ein Gerät (8) angeordnet ist, eine Bewegung von mindestens einer der Rollen hervorzurufen, um die Rollen zumindest einmal während des Beförderns zu der zweiten Position zu transferieren, damit die Spannung in den Ringen relaxiert, und dann wieder zu der ersten Position.

3. Ein Gerät nach Anspruch 2, **dadurch gekennzeichnet, dass** es zusätzlich einen Apparat (9) umfasst, der eingerichtet ist, das Gerät (8) zu kontrollieren, wiederholt während des Beförderns die Rollen (4, 5) zwischen der ersten und der zweiten Position zu transferieren.

4. Ein Gerät nach Anspruch 3, **dadurch gekennzeichnet, dass** der Apparat (9) eingerichtet ist, das Gerät (8) zu kontrollieren, einen Transfer der Rollen zwischen der ersten und der zweiten Position während des Beförderns mit einer im Wesentlichen konstanten Frequenz hervorzurufen, d.h. in im Wesentlichen regulären Zeitintervallen.

5. Ein Gerät nach Anspruch 3 oder 4, **dadurch gekennzeichnet, dass** der Apparat (9) eingerichtet ist, das Gerät (8) zu kontrollieren, die Rollen für eine längere Periode in der ersten Position als in der zweiten Position zu halten.

6. Ein Gerät nach Anspruch 5, **dadurch gekennzeichnet, dass** der Apparat (9) eingerichtet ist, das Gerät (8) zu kontrollieren, den Rollen eine Verweilzeit in der ersten Position im Verhältnis zu der Verweilzeit in der zweiten Position zu geben, welche mindestens vom Verhältnis 3:1 ist, vorzugsweise zwischen 3:1 und 6:1.

7. Ein Gerät nach einem der Ansprüche 2-6, **dadurch gekennzeichnet, dass** nur eine (5) der Rollen beweglich ist, um die relative Bewegung der Rollen zwischen der ersten und zweiten Position zu erlauben, und dass das Gerät (8) eingerichtet ist, die Bewegung der Rolle hervorzurufen.

8. Ein Gerät nach einem der Ansprüche 2-7, **dadurch gekennzeichnet, dass** die Rollen (4, 5) zwei an der Zahl sind und im Wesentlichen vertikal eine (4) über der anderen (5) angeordnet sind.

9. Ein Gerät nach einem der vorhergehenden Ansprüche, **dadurch gekennzeichnet, dass** die Rollen (4, 5) eingerichtet sind, relativ zueinander im Wesentlichen senkrecht zu ihren longitudinalen Achsen beweglich zu sein, und dass ein Gerät (8) eingerichtet ist, die Bewegung von mindestens einer der Rollen hervorzurufen für einen Transfer der Rollen zu einer dritten wechselseitigen Position, in welcher der minimale innere Umfang der Ringe, definiert durch die Rollen, beträchtlich kleiner ist als der innere Umfang der Ringe in der Ruheposition, um die teilweise ungeordnete Menge von Ringen zu der Empfangsfläche zu liefern, um zu der Position befördert zu werden.

10. Ein Gerät nach einem der vorhergehenden Ansprüche, **dadurch gekennzeichnet, dass** es ein Element zum Variieren der Geschwindigkeit umfasst, mit welcher die Mittel (6) die erste der Rollen rotieren.

11. Ein Gerät nach einem der vorhergehenden Ansprüche, **dadurch gekennzeichnet, dass** die Mittel (6) eingerichtet sind, die erste Rolle dazu zu bringen, sich mit einer Geschwindigkeit von 50-100 U/min zu drehen.

12. Ein Gerät nach einem der vorhergehenden Ansprüche, **dadurch gekennzeichnet, dass** all die Rollen (4, 5) eingerichtet sind, drehbar zu sein.

13. Ein Gerät nach einem der vorhergehenden Ansprüche, **dadurch gekennzeichnet, dass** eine zweite (5) der Rollen eingerichtet ist, frei drehbar zu sein und sich mit der ersten Rolle in der ersten wechselseitigen Position zu drehen, während sich die erste Rolle (4) dreht, durch den Einfluss von Reibung von den Ringen, die damit in Kontakt stehen.

14. Ein Gerät nach einem der vorhergehenden Ansprüche, **dadurch gekennzeichnet, dass** die mindestens zwei der Rollen (4, 5) zueinander schräge Achsen haben, um den inneren Umfang der Ringe zu definieren, so dass dieser sich kontinuierlich verringert von der Empfangsfläche zu einem ersten Ende der Rollen.

15. Ein Gerät nach einem der vorhergehenden Ansprüche, **dadurch gekennzeichnet, dass** die mindestens eine Rolle (5') einen Durchmesser hat, der sich in einer Richtung von der Empfangsfläche zu dem ersten Ende verringert, um eine kontinuierliche Verringerung des minimalen inneren Umfangs der Ringe von der Empfangsfläche zu einem ersten Ende der Rollen zu erreichen.

16. Ein Gerät nach einem der vorhergehenden Ansprüche, **dadurch gekennzeichnet, dass** mindestens eine der Rollen (4, 5) eingerichtet ist, in einer Ebene schwingfähig zu sein, die ihre longitudinale Achse umfasst, um den Winkel der longitudinalen Achse dieser Rolle (5) relativ zu der longitudinalen Achse einer weiteren der Rollen festzulegen, und dass Elemente (15) eingerichtet sind, die Rolle zu schwingen, um das Festlegen des Winkels zu erreichen.

17. Ein Gerät nach Anspruch 16, **dadurch gekennzeichnet, dass** eine (5) der Rollen schwingfähig ist, vermittels der Elemente, innerhalb eines Bereichs von Winkelwerten von 0-8°.

18. Ein Gerät nach einem der vorhergehenden Ansprüche, **dadurch gekennzeichnet, dass** die Rollen (4, 5) eingerichtet sind, in der ersten wechselseitigen Position eine Abnahme des minimalen inneren Umfangs der Ringe aufzuweisen, die einer Neigung von zwischen 0,5 und 8 Grad entsprechen zwischen den Prozessen von sich entgegengesetzt drehenden Punkten der Ringe, definiert durch die Einhülloberfläche der Rollen von der Empfangsfläche zu dem ersten Ende.

19. Ein Gerät nach einem der vorhergehenden Ansprüche, **dadurch gekennzeichnet, dass** mindestens eine der Rollen in der Empfangsfläche einen Teil (16) mit einem Durchmesser hat, der in der Richtung entgegengesetzt zu dem ersten Ende abnimmt.

20. Ein Gerät nach einem der vorhergehenden Ansprüche, **dadurch gekennzeichnet, dass** die Anzahl der Rollen (4, 5) zwei ist.

21. Ein Gerät nach einem der vorhergehenden Ansprüche, **dadurch gekennzeichnet, dass** es Elemente (13) umfasst, die eingerichtet sind zu spüren, wenn ein erster der Ringe bei der Position ankommt, und **dadurch** ein Signal auszusenden, das die Mittel (6) stoppt und somit das Befördern.

22. Ein Verfahren, um aus einer mindestens teilweise ungeordneten Menge von wabbeligen Ringen eines elastischen Materials und mit im Wesentlichen demselben Umfang in einer unbelasteten Ruheposition die Ringe Stück für Stück in eine Position zu liefern, **dadurch gekennzeichnet, dass** eine zumindest teilweise ungeordnete Menge der Ringe auf einer Empfangsfläche (12) um mindestens zwei Rollen (4, 5) herum aufgezogen wird, welche durch Kontaktoberflächen für die Ringe auf ihren Einhülloberflächen und ihren wechselseitigen Abstand zusammen einen minimalen inneren Umfang für die Ringe definieren, von welchen ein jeder um all die Rollen herum aufgezogen wird, dass die Rollen in einer ersten wechselseitigen Position gehalten werden, um den minimalen inneren Umfang der Ringe zu definieren, so dass dieser kontinuierlich abnimmt über mindestens einen Großteil der Rollen von der Empfangsfläche in einer Richtung auf ein erstes Ende der Rollen und größer ist als der innere Umfang der Ringe in der Ruheposition, und dass mindestens eine erste der Rollen zur Drehung gebracht wird, um die Ringe mit ihr vermittels Reibung entlangzuziehen und sie von der Empfangsfläche zu dem ersten Ende hin zu befördern, um sie Stück für Stück zu der Position zu liefern

23. Ein Verfahren nach Anspruch 22, **dadurch gekennzeichnet, dass** die Rollen (4, 5) mindestens einmal während des Beförderns relativ zueinander im Wesentlichen senkrecht zu ihren longitudinalen Achsen zwischen der ersten Position und einer zweiten Position bewegt werden, in welcher die Rollen konzentrierter sind und der minimale innere Umfang der Ringe, definiert durch die Rollen von der Empfangsfläche und zu der Position, kleiner ist als der innere Umfang der Ringe in einer unbelasteten Ruheposition, und dann die Rollen wieder zu der ersten Position bewegt werden.

24. Ein Verfahren nach Anspruch 23, **dadurch gekennzeichnet, dass** die Rollen (4, 5) zwischen der ersten und zweiten Position bei wiederholten Gelegenheiten während des Beförderns transferiert werden.

25. Ein Verfahren nach Anspruch 24, **dadurch gekennzeichnet, dass** die Rollen (4, 5) zwischen der ersten und zweiten Position mit einer im Wesentlichen konstanten Frequenz während des Beförderns transferiert werden, d.h. in im Wesentlichen regulären Zeitintervallen.

26. Ein Verfahren nach Anspruch 24 oder 25, **dadurch gekennzeichnet, dass** die Rollen (4, 5) für eine längere Periode in der ersten Position als in der zweiten Position gehalten werden.

27. Ein Verfahren nach Anspruch 26, **dadurch gekennzeichnet, dass** den Rollen (4, 5) eine Verweilzeit in der ersten Position im Verhältnis zu der Verweilzeit in der zweiten Position gegeben wird, welche mindestens vom Verhältnis 3:1 ist, vorzugsweise zwischen 3:1 und 6:1.

28. Ein Verfahren nach einem der Ansprüche 22-27, **dadurch gekennzeichnet, dass** die Rollen, zum Zuführen der teilweise ungeordneten Menge von Ringen zu der Empfangsfläche, relativ zueinander im Wesentlichen senkrecht zu ihren longitudinalen Achsen zu einer dritten Position bewegt werden, in welcher der minimale innere Umfang der Ringe, definiert durch die Rollen, beträchtlich kleiner ist als der innere Umfang der Ringe in einer unbelasteten Ruheposition.

29. Ein Verfahren nach einem der Ansprüche 23-28, **dadurch gekennzeichnet, dass** nur eine (5) der Rollen bewegt wird, um die relative Bewegung der Rollen zwischen den verschiedenen wechselseitigen Positionen zu erreichen.

30. Ein Verfahren nach einem der Ansprüche 22-29, **dadurch gekennzeichnet, dass** das Befördern auf Rollen (4, 5) ausgeführt wird, die alle drehbar angeordnet sind.

31. Ein Verfahren nach einem der Ansprüche 22-30, **dadurch gekennzeichnet, dass** eine erste (4) der Rollen zur Drehung gebracht wird, während eine zweite (5) der Rollen frei drehbar ist und in der ersten Position dazu gebracht wird, sich mit der ersten Rolle zu drehen durch den Einfluss von Reibung von den Ringen, die damit in Kontakt stehen.

32. Ein Verfahren nach einem der Ansprüche 22-31, **dadurch gekennzeichnet, dass** die Rollen (4, 5) wechselseitig in einer Ebene geschwungen werden, die ihre longitudinalen Achsen enthält, um den wechselseitigen Winkel zwischen den longitudinalen Achsen der Rollen festzulegen, um die Geschwindigkeit für das Befördern der Ringe festzulegen.

33. Eine Einrichtung, um aus einer mindestens teilweise ungeordneten Menge von wabbeligen Ringen (11) eines elastischen Materials und mit im Wesentlichen demselben Durchmesser in einer unbelasteten Ruheposition die Ringe Stück für Stück zu einer Aufnahmeposition für einen industriellen Roboter zu transferieren, **dadurch gekennzeichnet, dass** die Einrichtung mit mindestens einem Gerät (1, 2) gemäß einem der Ansprüche 1-21 bereitgestellt wird.

34. Eine Einrichtung nach Anspruch 33, **dadurch gekennzeichnet, dass** sie mit mindestens zwei der Geräte (1, 2) bereitgestellt wird, die angeordnet sind, beweglich zu sein zwischen einer Sortierposition, um aus der teilweise ungeordneten Menge von wabbeligen Ringen die Ringe Stück für Stück in eine Position zu liefern, und einer Position für das Sammeln der Ringe, einer nach dem anderen, durch den Roboter, so dass die Ringe Stück für Stück in einem Gerät geliefert werden können, während sie von dem Roboter von einem anderen Gerät aus aufgenommen werden, und dass sie Elemente umfasst, die angeordnet sind, die Geräte zwischen der Sortierposition und der Aufnahmeposition zu bewegen, um die Geräte dazu zu bringen, die Positionen zu verändern und Stillstandszeiten für den Roboter zu vermeiden.

35. Eine Einrichtung gemäß Anspruch 34, **dadurch gekennzeichnet, dass** die Geräte auf einem gemeinsamen, drehbaren Träger (3) angeordnet sind, wobei ihre Rollen (4, 5) mit dem ersten Ende im Wesentlichen radial auswärts von dem Ende zeigen, und dass die Transferelemente eingerichtet sind, eine Drehung des Trägers hervorzurufen, um die Positionen der Geräte zu verändern.

36. Eine Einrichtung nach Anspruch 33 oder 34, **dadurch gekennzeichnet, dass** die Mittel (6) der Geräte (1, 2) eingerichtet sind, die Ringe in eine Aufnahmeposition Schritt für Schritt zu befördern, nachdem der Roboter die Ringe gesammelt hat, so dass der am nächsten zu dem ersten Ende gelegene Ring immer in derselben Position ist, die für das Sammeln geeignet ist.

37. Eine Einrichtung nach einem der Ansprüche 33-36, **dadurch gekennzeichnet, dass** der Roboter mit einem Greifelement (18) bereitgestellt ist, welches eingerichtet ist, einen Ring (11) in der Aufnahmeposition an mindestens zwei verschiedenen Stellen entlang des Rings zu greifen, um danach den Ring relativ offen zu halten.

38. Eine Einrichtung nach Anspruch 37, **dadurch gekennzeichnet, dass** sie mit einem Kegel (21) bereitgestellt ist, dessen Spitze im Wesentlichen vertikal ausgerichtet ist und der eingerichtet ist, einen Ring zu empfangen, der von dem Greifelement (18) des Roboters gegriffen und dann von oben losgelassen wird.

39. Eine Einrichtung nach Anspruch 38, **dadurch gekennzeichnet, dass** sie Elemente (23) umfasst, die eingerichtet sind, den auf dem Kegel (21) empfangenen Ring zu dehnen während des Vergrößerns des Durchmessers des Rings, dass Elemente eingerichtet sind, den Kegel wegzubewegen, wenn der Ring so gedehnt wird, und dass Elemente eingerichtet sind, den Ring von dem Dehnelement zu einem Strukturelement zuzuführen, wie z.B. einem Zylindermantel, von welchem beabsichtigt ist, dass es/er innerhalb des Rings gebracht wird, so dass dieser dann in einer vorgespanten Weise um diese Strukturelement herum Kontakt herstellen kann.

40. Ein Computerprogammprodukt zum Kontrollieren eines Geräts, um aus einer mindestens teilweise ungeordneten Menge von wabbeligen Ringen eines elastischen Materials und mit im Wesentlichen demselben Umfang in einer unbelasteten Ruheposition die Ringe Stück für Stück in eine Position zu liefern, wobei das Gerät mindestens zwei Rollen (4, 5) umfasst, die angeordnet sind, auf einer Empfangsfläche (12) davon eine mindestens teilweise ungeordnete Menge der Ringe zu empfangen, wobei die mindestens zwei Rollen durch Kontaktoberflächen für die Ringe auf ihren Einhülloberflächen und ihren wechselseitigen Abstand zusammen einen minimalen Umfang für die Ringe zu definieren, von denen jeder um all die Rollen herum aufgezogen werden kann, und wobei die Rollen eingerichtet sind, in einer ersten wechselseitigen Position den minimalen inneren Umfang der Ringe zu definieren, so dass der Umfang kontinuierlich abnimmt über mindestens einen Großteil der Rollen von der Empfangsfläche in einer Richtung auf ein erstes Ende der Rollen und größer ist als der innere Umfang der Ringe in der Ruheposition, wobei das Computerprogrammprodukt Softwarecodeteile umfasst, um einen Prozessor anzuweisen, den folgenden Schritt auszuführen, wenn das Produkt auf einem Computer laufen gelassen wird:
Kontrollieren des Geräts, mindestens eine erste der Rollen zur Drehung zu bringen, um die Ringe mit ihr vermittels Reibung entlangzuziehen und sie von der Empfangsfläche zu dem ersten Ende hin zu befördern, um sie Stück für Stück zu der Position zu liefern.

41. Das Computerprogrammprodukt nach Anspruch 40, weiter enthaltend Softwarecodeteile, um einen Prozessor anzuweisen, den folgenden Schritt auszuführen, wenn es auf einem Computer laufen gelassen wird:
Kontrollieren des Geräts, mindestens einmal pro Befördern von Ringen die Rollen relativ zueinander im Wesentlichen senkrecht zu ihren longitudinalen Achsen zu bewegen zwischen der ersten Position und einer zweiten Position, in welcher die Rollen konzentrierter sind und der minimale innere Umfang der Ringe, welcher durch die Rollen von der Empfangsfläche und zu der Position definiert ist, kleiner ist als der innere Umfang der Ringe in einer unbelasteten Ruheposition, und dann die Rollen zurück zu der ersten Position zu bewegen.

42. Das Computerprogrammprodukt nach einem der Ansprüche 40 oder 41, weiter umfassend
Computerprogrammcodeteile zum Kontrollieren des Geräts, um Verfahrensschritte gemäß einem der Ansprüche 24-29 oder 31-32 auszuführen.

43. Ein Computerprogrammprodukt nach einem der Ansprüche 40-42, welches zumindest teilweise über ein Netzwerk wie z.B. dem Internet bereitgestellt wird.

44. Ein computerlesbares Medium mit dem darauf geschriebenen Computerprogrammprodukt nach einem der Ansprüche 40-43.

## Revendications

1. Dispositif pour fournir, à partir d'une quantité au moins en partie désordonnée d'anneaux lâches faits d'un matériau élastique et ayant essentiellement la même circonférence dans une position de repos sans tension, les anneaux un par un dans une position, **caractérisé en ce qu'**il comprend au moins deux rouleaux (4, 5) adaptés pour recevoir, sur une zone de réception (12) de ceux-ci, une quantité au moins en partie désordonnée (10) desdits anneaux (11), qui sont montés chacun autour de tous les rouleaux, **en ce que** les rouleaux sont agencés pour définir ensemble, par des surfaces de contact pour les anneaux sur leurs surfaces d'enveloppe et leurs distances mutuelles, une circonférence intérieure minimum pour les anneaux, **en ce que** les rouleaux sont agencés pour définir, dans une première position mutuelle de ceux-ci, ladite circonférence intérieure minimum des anneaux de telle manière que ladite circonférence diminue de façon continue, au moins sur une partie principale des rouleaux, depuis la zone de réception en direction d'une première extrémité des rouleaux et est plus grande que la circonférence intérieure des anneaux dans ladite position de repos, et **en ce qu'**il comprend un moyen (6) adapté pour mettre au moins un premier (4) des rouleaux en rotation afin de tirer les anneaux avec lui, par frottement, et de les faire avancer de la zone de réception vers ladite première extrémité pour les distribuer un à un à ladite position.

2. Dispositif selon la revendication 1, **caractérisé en ce que** les rouleaux (4, 5) sont adaptés pour être mobiles l'un par rapport à l'autre essentiellement perpendiculairement à leurs axes longitudinaux, entre au moins ladite première position et une deuxième position, dans laquelle les rouleaux sont plus rapprochés et ladite circonférence intérieure minimum des anneaux définie par les rouleaux depuis ladite zone de réception et jusqu'à ladite position est inférieure à la circonférence intérieure des anneaux dans une position de repos sans tension, et **en ce qu'**un dispositif (8) est adapté pour mettre en mouvement au moins l'un des rouleaux afin de transférer, au moins une fois pendant ladite avance, lesdits rouleaux dans la deuxième position afin de relâcher la tension des anneaux puis de nouveau dans la première position.

3. Dispositif selon la revendication 2, **caractérisé en ce qu'**il comprend de plus un appareil (9) adapté pour commander ledit dispositif (8), de façon répétée pendant ladite avance, pour transférer les rouleaux (4, 5) entre les première et deuxième positions.

4. Dispositif selon la revendication 3, **caractérisé en ce que** l'appareil (9) est adapté pour commander ledit dispositif (8) pour provoquer un transfert des rouleaux entre les première et deuxième positions avec une fréquence essentiellement constante, à savoir, à des intervalles de temps essentiellement réguliers, pendant ladite avance.

5. Dispositif selon la revendication 3 ou 4, **caractérisé en ce que** l'appareil (9) est adapté pour commander ledit dispositif (8) pour maintenir les rouleaux pendant une plus longue période dans la première position que dans la deuxième position.

6. Dispositif selon la revendication 5, **caractérisé en ce que** l'appareil (9) est adapté pour commander ledit dispositif (8) pour donner aux rouleaux un temps de résidence dans la première position relativement au temps de résidence dans la deuxième position qui présente un rapport d'au moins 3/1, et de préférence compris entre 3/1 et 6/1.

7. Dispositif selon l'une quelconque des revendications 2 à 6, **caractérisé en ce qu'**un seul (5) des rouleaux est mobile pour permettre ledit mouvement relatif des rouleaux entre les première et deuxième positions, et **en ce que** ledit dispositif (8) est adapté pour mettre en mouvement ledit rouleau.

8. Dispositif selon l'une quelconque des revendications 2 à 7, **caractérisé en ce que** les rouleaux (4, 5) sont au nombre de deux et sont disposés l'un (4) essentiellement verticalement au-dessus de l'autre (5).

9. Dispositif selon l'une quelconque des revendications précédentes, **caractérisé en ce que** les rouleaux (4, 5) sont agencés pour être mobiles l'un par rapport à l'autre essentiellement perpendiculairement à leurs axes longitudinaux, et **en ce qu'**un dispositif (8) est agencé pour mettre en mouvement au moins l'un des rouleaux pour transférer les rouleaux vers une troisième position mutuelle, dans laquelle ladite circonférence intérieure minimum des anneaux définie par les rouleaux est considérablement inférieure à la circonférence intérieure des anneaux dans ladite position de repos pour fournir à la zone de réception ladite quantité partiellement désordonnée d'anneaux à amener dans ladite position.

10. Dispositif selon l'une quelconque des revendications précédentes, **caractérisé en ce qu'**il comprend un organe pour faire varier la vitesse à laquelle ledit moyen (6) fait tourner ledit premier des rouleaux.

11. Dispositif selon l'une quelconque des revendications précédentes, **caractérisé en ce que** ledit moyen (6) est adapté pour mettre en rotation ledit premier rouleau à une vitesse de 50 à 100 tr/min.

12. Dispositif selon l'une quelconque des revendications précédentes, **caractérisé en ce que** tous les rouleaux (4, 5) sont adaptés pour pouvoir être mis en rotation.

13. Dispositif selon l'une quelconque des revendications précédentes, **caractérisé en ce qu'**un deuxième (5) des rouleaux est adapté pour pouvoir tourner librement et pour tourner avec ledit premier rouleau, dans ladite première position mutuelle pendant que le premier rouleau (4) est en rotation, par l'influence du frottement provenant des anneaux établissant un contact avec eux.

14. Dispositif selon l'une quelconque des revendications précédentes, **caractérisé en ce que** les au moins deux desdits rouleaux (4, 5) ont des axes obliques l'un par rapport à l'autre pour définir ladite circonférence intérieure minimum des anneaux, de sorte que celle-ci diminue de façon continue depuis ladite zone de réception vers une première extrémité des rouleaux.

15. Dispositif selon l'une quelconque des revendications précédentes, **caractérisé en ce que** ledit au moins un rouleau (5') a un diamètre qui diminue dans une direction allant de ladite zone de réception vers ladite première extrémité afin d'obtenir une diminution continue de ladite circonférence intérieure minimum des anneaux de la zone de réception vers une première extrémité des rouleaux.

16. Dispositif selon l'une quelconque des revendications précédentes, **caractérisé en ce que** au moins l'un des rouleaux (4, 5) est agencé pour être capable de pivoter dans un plan comprenant son axe longitudinal pour régler l'angle de l'axe longitudinal de ce rouleau (5) par rapport à l'axe longitudinal d'un autre des rouleaux, et **en ce que** des organes (15) sont agencés pour faire pivoter ledit rouleau pour obtenir le réglage dudit angle.

17. Dispositif selon la revendication 16, **caractérisé en ce que** ledit un (5) des rouleaux est capable de pivoter, par l'intermédiaire desdits organes, dans une plage de valeurs dudit angle de 0 à 8°.

18. Dispositif selon l'une quelconque des revendications précédentes, **caractérisé en ce que** les rouleaux (4, 5) sont adaptés pour présenter, dans ladite première position mutuelle, une diminution de ladite circonférence intérieure minimum des anneaux correspondant à une inclinaison comprise entre 0,5 et 8 degrés entre les processus de points tournants opposés des anneaux définis par la surface d'enveloppe des rouleaux de la zone de réception vers ladite première extrémité.

19. Dispositif selon l'une quelconque des revendications précédentes, **caractérisé en ce que** au moins l'un des rouleaux comporte, dans la zone de réception, une partie (16) d'un diamètre diminuant dans une direction opposée à ladite première extrémité.

20. Dispositif selon l'une quelconque des revendications précédentes, **caractérisé en ce que** le nombre des rouleaux (4, 5) est égal à deux.

21. Dispositif selon l'une quelconque des revendications précédentes, **caractérisé en ce qu'**il comprend des organes (13) adaptés pour détecter quand un premier des anneaux arrive à ladite position et pour envoyer de ce fait un signal arrêtant ledit moyen (6) et donc l'avance.

22. Procédé pour fournir, à partir d'une quantité au moins en partie désordonnée d'anneaux lâches faits d'un matériau élastique et ayant essentiellement la même circonférence dans une position de repos sans tension, les anneaux un par un dans une position, **caractérisé en ce que** une quantité au moins en partie désordonnée desdits anneaux sont montés, dans une zone de réception (12), autour d'au moins deux rouleaux (4, 5) qui, par des surfaces de contact pour les anneaux sur leurs surfaces d'enveloppe et leur distance mutuelle, définissent ensemble une circonférence intérieure minimum pour les anneaux, qui sont montés chacun autour de tous les rouleaux, **en ce que** les rouleaux sont maintenus dans une première position mutuelle pour définir ladite circonférence intérieure minimum des anneaux de telle manière que celle-ci diminue de façon continue, au moins sur une partie principale des rouleaux, depuis la zone de réception en direction d'une première extrémité des rouleaux et est plus grande que la circonférence intérieure des anneaux dans ladite position de repos, et **en ce qu'**au moins un premier des rouleaux est mis en rotation afin de tirer les anneaux avec lui, par frottement, et de les faire avancer de la zone de réception vers ladite première extrémité pour les distribuer un à un à ladite position.

23. Procédé selon la revendication 22, **caractérisé en ce que,** au moins une fois pendant ladite avance, les rouleaux (4, 5) sont déplacés l'un par rapport à l'autre essentiellement perpendiculairement à leurs axes longitudinaux entre ladite première position et une deuxième position dans laquelle les rouleaux sont plus rapprochés et ladite circonférence intérieure minimum des anneaux, qui est définie par les rouleaux depuis ladite zone de réception et jusqu'à ladite position, est inférieure à la circonférence intérieure des anneaux dans une position de repos sans tension, puis les rouleaux sont mis de nouveau dans la première position.

24. Procédé selon la revendication 23, **caractérisé en ce que** les rouleaux (4, 5) sont transférés entre les première et deuxième positions à des occasions répétées pendant ladite avance.

25. Procédé selon la revendication 24, **caractérisé en ce que** les rouleaux (4, 5) sont transférés entre les première et deuxième positions avec une fréquence essentiellement constante, à savoir, à des intervalles de temps essentiellement réguliers, pendant ladite avance.

26. Procédé selon la revendication 24 ou 25, **caractérisé en ce que** les rouleaux (4, 5) sont maintenus plus longtemps dans la première position que dans la deuxième position.

27. Procédé selon la revendication 26, **caractérisé en ce que** les rouleaux (4, 5) obtiennent un temps de résidence dans la première position relativement au temps de résidence dans la deuxième position qui présente un rapport d'au moins 3/1, et de préférence compris entre 3/1 et 6/1.

28. Procédé selon l'une quelconque des revendications 22 à 27, **caractérisé en ce que,** pour fournir ladite quantité partiellement désordonnée d'anneaux à la zone de réception, les rouleaux (4, 5) sont déplacés l'un par rapport à l'autre essentiellement perpendiculairement à leurs axes longitudinaux vers une troisième position, dans laquelle ladite circonférence intérieure minimum des anneaux définie par les rouleaux est considérablement inférieure à la circonférence intérieure des anneaux dans une position de repos sans tension.

29. Procédé selon l'une quelconque des revendications 23 à 28, **caractérisé en ce que** un seul (5) des rouleaux est déplacé pour réaliser ledit mouvement relatif des rouleaux entre lesdites différentes positions mutuelles.

30. Procédé selon l'une quelconque des revendications 22 à 29, **caractérisé en ce que** l'avance est effectuée sur des rouleaux (4, 5) qui sont tous agencés de manière rotative.

31. Procédé selon l'une quelconque des revendications 22 à 30, **caractérisé en ce qu'**un premier (4) des rouleaux est mis en rotation tandis qu'un deuxième (5) des rouleaux est en rotation libre et, dans ladite première position mutuelle, mis en rotation avec le premier rouleau par l'influence du frottement des anneaux entrant en contact avec lui.

32. Procédé selon l'une quelconque des revendications 22 à 31, **caractérisé en ce que** l'on fait pivoter mutuellement les rouleaux (4, 5) dans un plan comprenant leurs axes longitudinaux pour régler l'angle mutuel entre les axes longitudinaux des rouleaux pour régler la vitesse pour ladite avance des anneaux.

33. Installation pour transférer, à partir d'une quantité au moins en partie désordonnée d'anneaux lâches (11) faits d'un matériau élastique et ayant essentiellement le même diamètre dans une position de repos sans tension, les anneaux un par un vers une position de saisie pour un robot industriel, **caractérisé en ce que** l'installation est pourvue d'au moins un dispositif (1, 2) selon l'une quelconque des revendications 1 à 21.

34. Installation selon la revendication 33, **caractérisée en ce qu'**elle est pourvue d'au moins deux desdits dispositifs (1, 2) agencés de façon à être mobiles entre une position de triage afin de délivrer, à partir de ladite quantité en partie désordonnée d'anneaux lâches, les anneaux un par un dans une position et une position de collecte des anneaux un par un par ledit robot, de sorte que les anneaux peuvent être distribués un par un dans un dispositif tandis qu'ils sont saisis par le robot depuis un autre dispositif, et **en ce qu'**il comprend des organes adaptés pour déplacer les dispositifs entre la position de triage et la position de saisie afin de mettre les dispositifs dans des positions décalées et d'éviter les temps d'arrêt pour le robot.

35. Installation selon la revendication 34, **caractérisée en ce que** les dispositifs sont placés sur un support commun rotatif (3) avec leurs rouleaux (4, 5) pointant avec leur première extrémité essentiellement radialement vers l'extérieur depuis ladite extrémité, et **en ce que** lesdits organes de transfert sont agencés pour mettre en rotation le support pour décaler les positions des dispositifs.

36. Installation selon la revendication 33 ou 34, **caractérisée en ce que** lesdits moyens (6) des dispositifs (1, 2) sont adaptés pour faire avancer les anneaux, dans une position de saisie, pas à pas après que le robot a collecté un anneau, de sorte que l'anneau le plus proche de ladite première extrémité est toujours dans la même position appropriée pour ladite collecte.

37. Installation selon l'une quelconque des revendications 33 à 36, **caractérisée en ce que** ledit robot est pourvu d'un organe de préhension (18) adapté pour saisir un anneau (11) dans la position de saisie en au moins deux emplacements différents le long de l'anneau afin de maintenir ensuite l'anneau relativement ouvert.

38. Installation selon la revendication 37, **caractérisée en ce qu'**elle est pourvue d'un cône (21) dont la pointe est orientée essentiellement verticalement, agencé pour recevoir un anneau saisi par l'organe de préhension (18) du robot puis relâché de dessus.

39. Installation selon la revendication 38, **caractérisée en ce qu'**elle comprend des organes (23) adaptés pour étirer l'anneau reçu sur ledit cône (21) tout en augmentant le diamètre de l'anneau, **en ce que** des organes sont agencés pour éloigner le cône quand l'anneau est étiré, et **en ce que** des organes sont agencés pour fournir l'anneau dudit organe d'étirement à un organe structurel, comme une chemise de cylindre, destiné à être mis à l'intérieur de l'anneau, de façon que celui-ci puisse ensuite se mettre en contact de manière précontrainte autour de cet organe structurel.

40. Produit de programme informatique pour commander un dispositif pour fournir, à partir d'une quantité au moins en partie désordonnée d'anneaux lâches faits d'un matériau élastique et ayant essentiellement la même circonférence dans une position de repos sans tension, les anneaux un par un dans une position, dans lequel le dispositif comprend au moins deux rouleaux (4, 5) adaptés pour recevoir, sur une zone de réception (12) de ceux-ci, une quantité au moins en partie désordonnée desdits anneaux, lesquels au moins deux rouleaux, par des surfaces de contact pour les anneaux sur leurs surfaces d'enveloppe et leur distance mutuelle, définissent ensemble une circonférence intérieure minimum pour les anneaux, qui peuvent être montés chacun autour de tous les rouleaux, et dans lequel les rouleaux sont agencés pour définir, dans une première position mutuelle, ladite circonférence intérieure minimum des anneaux de telle manière que celle-ci diminue de façon continue, au moins sur une partie principale des rouleaux, depuis la zone de réception en direction d'une première extrémité des rouleaux et est plus grande que la circonférence intérieure des anneaux dans ladite position de repos, le produit de programme informatique comprenant des parties de code logiciel pour ordonner à un processeur d'exécuter l'étape suivante quand le produit fonctionne sur un ordinateur :
commander le dispositif pour mettre au moins un premier des rouleaux en rotation afin de tirer avec lui les anneaux, par frottement, et faire avancer les anneaux de la zone de réception vers ladite première extrémité pour distribuer les anneaux un à un à ladite position.

41. Produit de programme informatique selon la revendication 40, comprenant en outre des parties de code logiciel pour ordonner à un processeur d'exécuter l'étape suivante quand il fonctionne sur un ordinateur :
commander le dispositif pour déplacer, au moins une fois par avance des anneaux, les rouleaux l'un par rapport à l'autre essentiellement perpendiculairement à leurs axes longitudinaux entre ladite première position et une deuxième position dans laquelle les rouleaux sont plus rapprochés et ladite circonférence intérieure minimum des anneaux, qui est définie par les rouleaux depuis ladite zone de réception et jusqu'à ladite position, est inférieure à la circonférence intérieure des anneaux dans une position de repos sans tension, puis pour faire revenir les rouleaux dans la première position.

42. Produit de programme informatique selon la revendication 40 ou 41, comprenant en outre des parties de code de programme informatique pour commander le dispositif pour exécuter les étapes de procédé de l'une quelconque des revendications 24 à 29 ou 31 à 32.

43. Produit de programme informatique selon l'une quelconque des revendications 40 à 42, fourni au moins en partie sur un réseau comme Internet.

44. Support lisible par ordinateur sur lequel est enregistré le produit de programme informatique selon l'une quelconque des revendications 40 à 43.
